# FASCICULE DE BREVET EUROPEEN

(11) **EP 3 877 450 B1**
(45) Date de publication et mention de la délivrance du brevet: **02.07.2025**
(21) Numéro de dépôt: 19829665.9
(22) Date de dépôt: 07.11.2019
(51) Int. Cl.: C08G 81/02, B60C 1/00, C08K 3/36, C08G 65/32

(54) **COMPOSITION DE CAOUTCHOUC À BASE D'UN ÉLASTOMÈRE DIÉNIQUE MODIFIÉ**
KAUTSCHUKZUSAMMENSETZUNG AUF DER BASIS EINES MODIFIZIERTEN DIENELASTOMERS
RUBBER COMPOSITION BASED ON A MODIFIED DIENE ELASTOMER

(30) Priorité: 08.11.2018 FR 1860307
(43) Date de publication de la demande: 15.09.2021
(73) Titulaire: COMPAGNIE GENERALE DES ETABLISSEMENTS MICHELIN, 63000 Clermont-Ferrand (FR)
(72) Inventeur: DIRE, Charlotte, 63040 CLERMONT-FERRAND CEDEX 9 (FR); DE-GAUDEMARIS, Benoît, 63040 CLERMONT-FERRAND CEDEX 9 (FR); CHATARD, Julien, 63040 CLERMONT-FERRAND CEDEX 9 (FR); ROOS, Kevin, 63040 CLERMONT-FERRAND CEDEX 9 (FR)
(74) Mandataire: M.F.P. Michelin
(86) Numéro de dépôt international: PCT/FR2019/052643
(87) Numéro de publication internationale: WO 2020/094990

(56) Documents cités:
- WO-A1-2009/000750
- WO-A1-2015/044225

## Description

### Domaine technique

L'invention se rapporte à une composition de caoutchouc comprenant un élastomère diénique modifié et de la silice à titre de charge renforçante.

### Technique antérieur

Depuis que les économies de carburant et la nécessité de préserver l'environnement sont devenues une priorité, il est souhaitable de produire des mélanges possédant une hystérèse aussi faible que possible afin de pouvoir les mettre en œuvre sous forme de compositions de caoutchouc utilisables pour la fabrication de divers produits semi-finis entrant dans la composition de pneus, tels que par exemple des sous-couches, des flancs, des bandes de roulement, et afin d'obtenir des pneus possédant une résistance au roulement réduite.

Idéalement, par exemple, une bande de roulement de pneu doit obéir à un grand nombre d'exigences techniques, souvent antinomiques, parmi lesquelles une résistance élevée à l'usure tout en offrant au pneu une faible résistance au roulement.

Par ailleurs la réduction de l'hystérèse des mélanges, gage d'une réduction de la résistance au roulement, doit également se faire en conservant intacte l'aptitude à la mise en œuvre, en particulier à cru, des mélanges, tout en maintenant la résistance au fluage des élastomères.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante telle que la silice, il a été proposé d'utiliser des polymères diéniques fonctionnalisés par des dérivés alcoxysilanes notamment en combinant ou non la fonctionnalisation par des fonctions alcoxysilanes à la fonctionnalisation par d'autres fonctions, notamment des fonctions amine, imine, époxy ou encore thiol.

La fonctionnalisation par des composés alcoxysilane porteurs d'une fonction aminée a été largement décrite dans la littérature brevet. Les élastomères fonctionnalisés en bout de chaîne par des fonctions alcoxysilanes portant un groupement aminé ont été associés aussi bien à de la silice qu'à du noir de carbone, voire un mélange de ces deux charges, dans des compositions de caoutchouc destinées à la fabrication de pneus.

La Demanderesse a décrit quant à elle, dans le document WO 2009133068 A1, un élastomère diénique fonctionnalisé essentiellement constitué par l'espèce couplée d'un élastomère possédant au sein de la chaîne un groupement porteur d'une fonction alcoxysilane et d'une fonction amine, l'atome de silicium de ce groupement liant les deux parties de la chaîne élastomère diénique. Cet élastomère fonctionnalisé en milieu de chaîne confère à la composition le contenant des propriétés mécaniques et dynamiques améliorées, notamment une hystérèse améliorée, tout en conservant une mise en œuvre à cru satisfaisante, en vue notamment d'une utilisation en bande de roulement pour pneu.

Les documents EP 2 003 146 A2, US 2014/0243476A1 décrivent des élastomères diéniques modifiés avec des agents de fonctionnalisation possédant à la fois au moins un atome de silicium et au moins un atome d'azote. JP 2016017097A décrit des élastomères diéniques modifiés avec des agents de fonctionnalisation possédant à la fois au moins un atome de silicium et au moins un atome d'azote, portant en extrémité des chaînes non liée à l'agent de fonctionnalisation, un groupement fonctionnel aminé. Ces documents proposent d'améliorer les propriétés mécaniques et dynamiques des compositions de caoutchouc possédant des faibles taux de charge renforçante et destinées à une application pneu, et mettent notamment en avant des gains en adhérence sur sol mouillé, une amélioration de la dissipation de chaleur, des gains en résistance au roulement ou encore en abrasion.

Les demandes WO2009/000750 et WO 2015/044225 décrivent des compositions comprenant un élastomère diénique SBR modifié au moyen d'un agent de modification le poly(oxy-1,2-ethanediyl)-α-[3-(dichlorométhylsilyl)propyl]-ω-[3-(dichlorométhylsilyl)propoxy]. Dans ces compositions, le taux de macromolécules branchées est inférieur à 20%.

En vue d'atteindre certaines performances du pneu, il peut s'avérer nécessaire d'utiliser plus ou moins de charge renforcante dans les compositions de caoutchouc qui composent les différentes parties du pneu. Or, l'utilisation de forte quantité de charge pour atteindre certaines de ces performances est toutefois antinomique avec la baisse recherchée de la résistance au roulement. En effet, l'utilisation d'un fort taux de charge renforçante dans le mélange utilisé pour fabriquer la bande de roulement, pénalise fréquemment, le cas échéant souvent de manière rédhibitoire, les propriétés de résistance au roulement, en s'accompagnant d'une augmentation importante des pertes hystérétiques de la composition de caoutchouc.

Le problème technique que se propose de résoudre la présente invention est d'atténuer l'effet de l'augmentation du taux de charge renforçante sur les propriétés dynamiques des compositions de caoutchouc et leur mise en œuvre en vue d'une utilisation de ces compositions pour la fabrication de pneus possédant une résistance au roulement réduite.

Poursuivant ses recherches, la Demanderesse a découvert que l'utilisation de certains élastomères diéniques modifiés particuliers dans des compositions de caoutchouc permet de réduire l'impact de l'augmentation du taux de charges renforçantes sur le compromis mise en œuvre/hystérèse. Il est ainsi possible de fournir des compositions de caoutchouc pour pneu comprenant un taux élevé en charges renforçantes tout en minimisant l'effet de ce taux élevé sur les propriétés d'hystérèse et de mise en œuvre des compositions.

### Exposé de l'invention

L'invention a donc pour objet une composition de caoutchouc à base au moins d'une charge renforçante et d'une matrice élastomère comprenant un élastomère diénique modifié, caractérisée en ce que
- le taux de charge renforçante est supérieur ou égal à 80 pce,
- le taux d'élastomère diénique modifié est supérieur ou égal à 75 pce, et
- l'élastomère diénique modifié comprend des macromolécules comprenant un bloc polyéther linéaire ou ramifié comprenant à chaque extrémité du bloc un point de branchement auquel est lié jusqu'à trois blocs élastomères diéniques et jusqu'à trois groupements -OR, R représentant, indépendamment les uns des autres, un substituant alkyle en C1-C8 ou un atome d'hydrogène,
   a - le copolymère présentant une viscosité Mooney d'au moins 40 et d'au plus 100,
   b- le copolymère étant composé
- d'au moins 20%, de préférence 30%, de macromolécules branchées comprenant le bloc polyéther auquel sont liés au moins trois blocs élastomères diéniques,
- d'au plus 80%, de préférence 70%, de macromolécules linéaires,
   c - le bloc polyéther présentant une masse moléculaire moyenne en nombre variant de 150 g/mol à 5000 g/mol, et
   d - chacun des points de branchement étant constitué d'un atome de silicium,
      les macromolécules branchées répondant à la formule I: 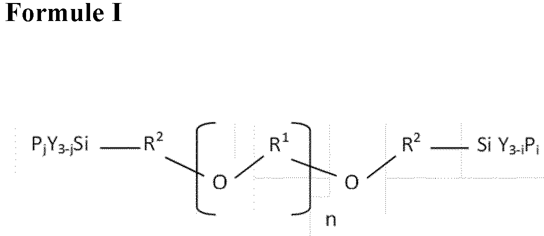 dans laquelle,
      R¹ représente un groupement hydrocarboné divalent, linéaire ou ramifié, en C₁-C₁₀, en particulier un groupement - CH(R') - CH(R'') - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
      les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10, de préférence 3 à 8 ;
      les Y représentent, de manière identique ou différente, un atome d'halogène ou un groupe de formule - OR⁴ dans laquelle les R⁴ représentent indépendamment les uns des autres, un atome d'hydrogène, un substituant alkyle en C₁ - C₈, de préférence les R⁴ représentent un atome d'hydrogène ou un substituant alkyle C₁-C₄, de préférence méthyle ou éthyle,
      i et j sont des nombres valant chacun indépendamment de l'autre 1, 2 ou 3, sous réserve que (i+j) varie de 3 à 6, et
      P représente un bloc élastomère diénique ;
         et les macromolécules linéaires à blocs répondant à la formule II: 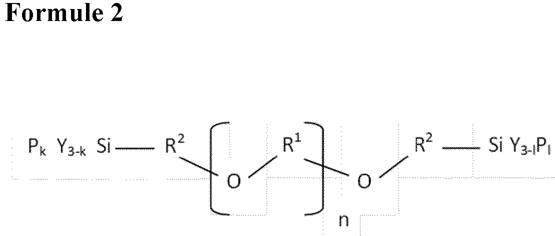 dans laquelle,
         R¹ représente un groupement hydrocarboné divalent, linéaire ou ramifié, en C₁-C₁₀, en particulier un groupement - CH(R') - CH(R'') - dans lequel R' et R'' sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
         les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10, de préférence 3 à 8 ;
         les Y représentent, de manière identique ou différente, un atome d'halogène ou un groupe de formule - OR⁴ dans laquelle les R⁴ représentent indépendamment les uns des autres, un atome d'hydrogène, un substituant alkyle en C₁ - C₈, de préférence les R⁴ représentent un atome d'hydrogène ou un substituant alkyle C₁-C₄, de préférence méthyle ou éthyle,
         k et 1 sont des nombres valant chacun indépendamment de l'autre 0 ou 1, sous réserve que (k+1) vaut 1 ou 2, et
         P représente un bloc élastomère diénique.

### Description détaillée

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également l'intervalle représenté par l'expression "entre a et b".

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, l'abréviation "pce" signifie parties en poids pour cent parties en masse d'élastomères présents dans la matrice élastomère, la matrice élastomère désignant la totalité des élastomères présents dans la composition de caoutchouc.

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. De la même manière, une espèce fonctionnelle d'un élastomère diénique modifié dite majoritaire est celle représentant la plus grande fraction pondérale parmi les espèces fonctionnalisées constituant l'élastomère diénique, par rapport au poids total de l'élastomère diénique modifié. Dans un système comprenant un seul composé d'un certain type, celui-ci est majoritaire au sens de la présente invention.

Dans la présente description, on entend par viscosité Mooney, la viscosité Mooney ML(1+4)100 °C d'un composé, notamment de l'élastomère diénique modifié de l'invention, mesurée selon la norme ASTM D1646.

Dans la présente description, on entend par « polyéther fonctionnel » un polyéther difonctionnel. Le polyéther fonctionnel peut être linéaire ou ramifié et présente une chaîne principale comprenant à chacune des deux extrémités un atome de silicium, chacun substitué par trois fonctions alcoxyles ou par trois atomes halogène. Un polyéther linéaire comprend aux deux extrémités de la chaîne polymère un atome de silicium, chacun substitué par trois fonctions alcoxyles ou par trois atomes halogène. Un polyéther ramifié comprend une chaîne linéaire principale dont toutes ou une partie des unités de répétition sont ramifiées. Un polyéther ramifié comprend à chacune des deux extrémités de la chaîne principale un atome de silicium, chacun substitué par trois fonctions alcoxyles ou par trois atomes halogène. Les ramifications sont hydrocarbonées, de préférence aliphatiques, et ne comprennent pas d'atome de silicium.

Dans la présente description, on entend par élastomère diénique modifié un mélange de macromolécules issues de la réaction avec un polyéther fonctionnel comprenant six fonctions réactives trialcoxysilyles ou trihalogénosilyles.

L'homme du métier comprendra qu'une réaction de modification avec un composé comprenant plus d'une fonction réactive vis-à-vis de l'élastomère vivant résulte en un mélange de macromolécules linéaires et de macromolécules branchées à au moins trois branches et au plus autant de branches que de fonctions réactives du polyéther fonctionnel. Selon les conditions opératoires, principalement le rapport molaire du nombre de fonctions réactives du polyéther fonctionnel aux chaînes vivantes, certaines macromolécules sont plus ou moins présentes, dans le mélange.

Dans la présente description, l'expression "unité monomère", qu'il soit diène ou autre, s'entend comme une unité répétitive du polymère issue du monomère en question.

Il convient de noter que dans le cadre de l'invention, les monomères utilisés peuvent être d'origine fossile ou biosourcée. Dans ce dernier cas, ils peuvent être partiellement ou totalement issus de la biomasse ou obtenus à partir de matières premières renouvelables issues de la biomasse.

Ainsi l'invention concerne une composition de caoutchouc à base au moins d'une charge renforçante comprenant de la silice et d'une matrice élastomère comprenant un élastomère diénique modifié, caractérisée en ce que
- le taux de silice est supérieur ou égal à 80 pce,
- le taux d'élastomère diénique modifié est supérieur ou égal à 75 pce, et
- l'élastomère diénique modifié comprend des macromolécules comprenant au sein de leur structure un bloc polyéther, linéaire ou ramifié, comprenant aux deux extrémités du bloc un point de branchement auquel sont liés jusqu'à trois blocs élastomères diéniques et jusqu'à trois groupements -OR, R représentant, indépendamment les uns des autres, un substituant alkyle en C1-C8 ou un atome d'hydrogène,
   a- le copolymère présentant une viscosité Mooney d'au moins 40 et d'au plus 100,
   b- le copolymère étant composé
      - d'au moins 20%, de préférence au moins 30%, de macromolécules branchées comprenant un bloc polyéther auquel sont liés au moins trois blocs élastomères diéniques,
      - d'au plus 80%, de préférence au plus 70%, de macromolécules linéaires,
   c- le bloc polyéther présentant une masse moléculaire moyenne en nombre variant de 150 à 5000 g/mol, et
   d- chacun des points de branchement étant constitué d'un atome de silicium,
      les macromolécules branchées répondant à la formule I: 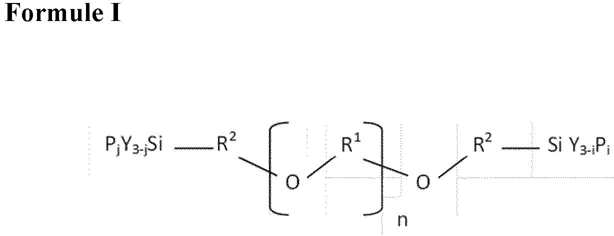 dans laquelle,
      R¹ représente un groupement hydrocarboné divalent, linéaire ou ramifié, en C₁-C₁₀, en particulier un groupement - CH(R') - CH(R") - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
      les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10, de préférence 3 à 8 ;
      les Y représentent, de manière identique ou différente, un atome d'halogène ou un groupe de formule - OR⁴ dans laquelle les R⁴ représentent indépendamment les uns des autres, un atome d'hydrogène, un substituant alkyle en C₁ - C₈, de préférence les R⁴ représentent un atome d'hydrogène ou un substituant alkyle C₁-C₄, de préférence méthyle ou éthyle,
      i et j sont des nombres valant chacun indépendamment de l'autre 1, 2 ou 3, sous réserve que (i+j) varie de 3 à 6, et
      P représente un bloc élastomère diénique ;
      et les macromolécules linéaires à blocs répondant à la formule II: 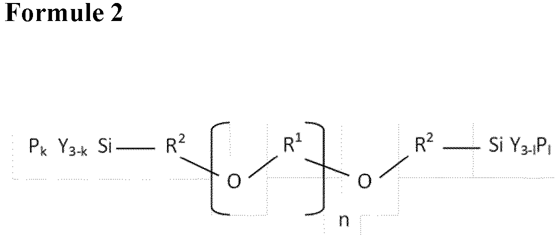 dans laquelle,
         R¹ représente un groupement hydrocarboné divalent, linéaire ou ramifié, en C₁-C₁₀, en particulier un groupement - CH(R') - CH(R'') - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
         les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10, de préférence 3 à 8 ;
         les Y représentent, de manière identique ou différente, un atome d'halogène ou un groupe de formule - OR⁴ dans laquelle les R⁴ représentent indépendamment les uns des autres, un atome d'hydrogène, un substituant alkyle en C₁ - C₈, de préférence les R⁴ représentent un atome d'hydrogène ou un substituant alkyle C₁-C₄, de préférence méthyle ou éthyle,
         k et 1 sont des nombres valant chacun indépendamment de l'autre 0 ou 1,
            sous réserve que (k+1) vaut 1 ou 2, et
            P représente un bloc élastomère diénique.

Par élastomère diénique susceptible d'être utilisé comme l'élastomère diénique modifié dans les compositions conformes à l'invention, doit être compris de manière connue un élastomère synthétique constitué au moins en partie d'unités monomères diènes, conjuguées ou non.

On entend plus particulièrement par élastomère diénique synthétique:
(a) - tout homopolymère d'un monomère diène, particulièrement un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs monomères diènes entre eux ou avec un ou plusieurs monomères vinylaromatiques.

Dans le cas de copolymères (b), ceux-ci contiennent de 20 à 99% en poids d'unités diéniques et de 1 à 80 % en poids d'unités issues de monomères vinylaromatiques.

A titre de diènes conjugués conviennent notamment le butadiène-1,3, le 2-méthyl-1,3-butadiène (isoprène), les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. De préférence, le diène conjugué est un dérivé du 1,3-butadiène, plus préférentiellement le 1,3-butadiène.

A titre de composés vinylaromatique conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène. De préférence le composé vinylaromatique est le styrène

Préférentiellement, l'élastomère diénique est choisi dans le groupe constitué par les polybutadiènes (BR), les polyisoprènes de synthèse (IR), les copolymères de butadiène, les copolymères d'isoprène, et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). Selon une variante de l'invention, l'élastomère diénique est plus particulièrement un copolymère de butadiène-styrène (SBR) ou un polybutadiène (BR).

L'élastomère diénique peut avoir toute microstructure qui est fonction des conditions de polymérisation utilisées.

L'élastomère diénique peut être à blocs, statistique, séquencé, microséquencé...

Selon une variante de l'invention, la masse molaire moyenne en nombre des branches élastomères de l'élastomère diénique modifié est inférieure à 150 000 g/mol, préférentiellement au moins 40 000 g/mol et au plus 100 000 g/mol.

Selon une variante de l'invention, l'extrémité des branches élastomères du copolymère à blocs, non liée à un atome de silicium peut porter une fonction comprenant un atome d'azote, de préférence une fonction amine, cyclique ou acyclique. De préférence les extrémités de branches élastomères du copolymère à blocs sont fonctionnalisées à au moins 70% molaire, par rapport au nombre de moles de branches élastomères, par une fonction amine, cyclique ou acyclique.

Les groupements alcoxy substituant l'atome de silicium peuvent être, selon certaines variantes de l'invention, partiellement ou totalement hydrolysés en hydroxyle. Selon ces variantes, tous ou au moins 50% molaire des groupements alcoxy portés par l'élastomère diénique modifié sont hydrolysés en hydroxyle. Particulièrement, au moins 80% molaire des fonctions alcoxy portées par l'élastomère diénique modifié est hydrolysé en hydroxyle, voire 100%.

Les substituants alkyles des groupements alcoxy substituant les atomes de silicium sont, indépendamment les uns des autres, choisis parmi les substituants alkyles en C1-C10, voire en C1-C8, de préférence parmi les substituants alkyles en C1-C4, plus préférentiellement parmi méthyle et éthyle.

Selon une variante de l'invention, le bloc polyéther est un bloc constitué d'unités - (O-R)- , dans lesquelles R est un groupement hydrocarboné divalent, de préférence un groupement aliphatique, linéaire ou ramifié, ayant 1 à 10 atomes de carbone, en particulier un groupement - CH(R') - CH(R") - dans lequel R' et R" sont, indépendamment l'un de l'autre, un atome d'hydrogène ou un substituant alkyle en C1-C4, de préférence R est un groupement alcanediyle en C1-C4, plus préférentiellement un groupement éthanediyle ou propanediyle 1,2- ou 1,3-.

On peut ainsi citer à titre de bloc polyéther convenant pour l'invention, le polyoxyméthylène, le poly(oxyde d'éthylène), le poly(oxyde de propylène), ou le polytétrahydrofurane, de préférence le bloc polyéther est un bloc poly(oxyde d'éthylène) ou poly(oxyde de propylène).

Le bloc polyéther présente une masse moléculaire moyenne en nombre sensiblement de 150 à 5000g/mol et préférentiellement de 200 à 3000 g/mol. La masse moléculaire moyenne en nombre est calculée par la technique SEC (Size Exclusion Chromatography) qui permet de séparer les macromolécules en solution suivant leur taille à travers des colonnes remplies d'un gel poreux. La méthode est explicitée plus loin dans le texte.

Selon l'invention, les points de branchement du copolymère à blocs sur lesquels sont liées les chaînes élastomères diéniques, sont des atomes de silicium. Les points de branchement sont au nombre de deux et se trouvent à chaque extrémité du bloc polyéther linéaire.

Ainsi, un point de branchement peut lier jusqu'à trois blocs élastomères diéniques au bloc polyéther.

Selon l'invention, les macromolécules linéaires sont constituées de chaînes élastomères non liées à un bloc polyéther, de macromolécules dont chaque point de branchement est lié à un bloc élastomère diénique (copolymère tribloc linéaire) et de macromolécules dont un seul point de branchement est lié à un bloc élastomère diénique (copolymère dibloc linéaire). Leur taux massique est d'au plus 80%, de préférence d'au plus 70% et plus préférentiellement encore d'au plus 65% par rapport au poids total du copolymère à blocs.

Selon l'invention, les macromolécules branchées sont constituées de macromolécules dont l'ensemble des points de branchement est lié à au plus trois blocs élastomères diéniques. Pour des raisons de faisabilité et de réalité technique, ces macromolécules présentent de préférence une répartition des blocs élastomères diéniques de part et d'autre du bloc polyéther, sur les points de branchement, C'est-à-dire que tous les blocs élastomères ne sont pas liés au même point de branchement mais répartis sur les deux points de branchement. Ainsi, lorsque le bloc polyéther est linéaire, les macromolécules à trois branches peuvent comporter deux branches élastomères à une extrémité du bloc polyéther et une branche élastomère à l'autre extrémité, les macromolécules à quatre branches peuvent comporter deux branches élastomères à une extrémité du bloc polyéther et deux branches élastomères à l'autre extrémité ou trois branches élastomères à une extrémité du bloc polyéther et une branche élastomère à l'autre extrémité, et ainsi de suite. Le taux massique des macromolécules branchées est d'au moins 20%, de préférence d'au moins 30%, de préférence encore d'au moins 35% par rapport au poids total du copolymère à blocs.

Lorsque les points de branchement, qui sont des atomes de silicium, ne sont pas liés à trois blocs élastomères diénique, ils sont substitués par un, deux ou trois substituants hydroxyles ou alcoxy en C1 - C8, préférentiellement en C1-C4, de préférence encore méthoxy ou éthoxy.

Les groupements alcoxy substituant l'atome de silicium peuvent être, selon certaines variantes de l'invention, partiellement ou totalement hydrolysés en hydroxyle. Selon ces variantes, tout ou au moins 50% molaire des fonctions alcoxy portées par l'élastomère diénique modifié est hydrolysé en hydroxyle. Particulièrement, au moins 80% molaire des fonctions alcoxy portées par l'élastomère diénique modifié est hydrolysé en hydroxyle, voire 100%.

Les macromolécules à blocs composant le copolymère diénique à blocs sont représentées par les formules I et II suivantes:
- les macromolécules branchées répondant à la formule I: 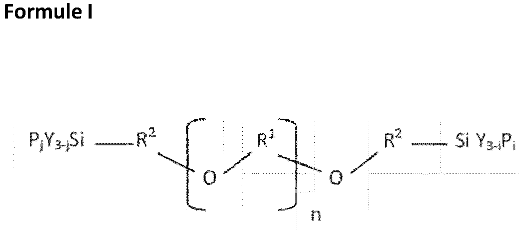 dans laquelle,
   - R1 représente un groupement hydrocarboné divalent, de préférence un groupement aliphatique, linéaire ou ramifié, ayant 1 à 10 atomes de carbone, en particulier un groupement - CH(R') - CH(R") - , dans lequel R' et R" sont, indépendamment l'un de l'autre, un atome d'hydrogène ou un substituant alkyle en C1-C4, de préférence R1 est un groupement alcanediyle en C1-C4, plus préférentiellement un groupement éthanediyle ou propanediyle 1,2- ou 1,3-,
   - les R2 représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
   - les Y représentent, de manière identique ou différente, un groupe de formule -OR4 dans laquelle les R4 représentent indépendamment les uns des autres, un atome d'hydrogène, un substituant alkyle en C1 - C18, cycloalkyle en C5-C18 ou aryle en C6 - C18, de préférence les R4 représentent un atome d'hydrogène ou un substituant alkyle en C1-C8, plus préférentiellement en C1-C4, de préférence encore méthyle ou éthyle.
   - i et j sont des nombres valant chacun indépendamment de l'autre 1, 2 ou 3, sous réserve que (i+j) varie de 3 à 6, et
   - P représente un bloc élastomère diénique ;
- les macromolécules linéaires à blocs répondant à la formule II: 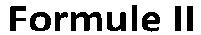 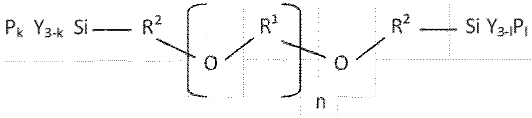 dans laquelle,
   - R1 représente un groupement hydrocarboné divalent, de préférence un groupement aliphatique, linéaire ou ramifié, saturé ou insaturé, ayant 1 à 10 atomes de carbone, en particulier un groupement - CH(R') - CH(R") - , dans lequel R' et R" sont, indépendamment l'un de l'autre, un atome d'hydrogène ou un substituant alkyle en C1-C4, de préférence R1 est un groupement alcanediyle en C1-C4, plus préférentiellement un groupement éthanediyle ou propanediyle 1,2 ou 1,3-,
   - les R2 représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10;
   - les Y représentent, de manière identique ou différente, un groupe de formule - OR4 dans laquelle les R4 représentent indépendamment les uns des autres, un atome d'hydrogène, un substituant alkyle en C1-C18, cycloalkyle en C5-C18 ou aryle en C6
   - C18, de préférence les R4 représentent un atome d'hydrogène ou un substituant alkyle en C1-C8, préférentiellement en C1-C4, de préférence encore méthyle ou éthyle,
   - k et 1 sont des nombres valant chacun indépendamment de l'autre 0 ou 1, sous réserve que (k+1) vaut 1 ou 2, et
   - P représente un bloc élastomère diénique.

Selon des variantes de l'invention combinables avec les précédentes, P représente une branche élastomère diénique portant en extrémité de chaîne un groupement comprenant un atome d'azote, plus particulièrement une fonction amine, cyclique ou acyclique.

L'élastomère diénique modifié selon une variante de réalisation préférée de l'invention comprend au moins 50% en poids de macromolécules branchées par rapport au poids total de l'élastomère diénique modifié, de préférence au moins 80% en poids, les macromolécules branchées étant l'ensemble des macromolécules à au moins trois branches de l'élastomère diénique modifié, c'est-à-dire qu'elles sont constituées d'un bloc polyéther auquel sont liés au moins trois blocs élastomères diéniques.

Le lecteur comprendra que, les macromolécules de l'élastomère diénique modifié répondant aux formules I et II, selon cette variante, au moins 50% en poids de macromolécules branchées par rapport au poids total de l'élastomère diénique modifié, de préférence au moins 80% en poids, répond à la formule I.

Selon une autre variante, combinable à la précédente, au plus 25% en poids du poids total de l'élastomère diénique modifié peut être constitué de macromolécules comprenant un bloc polyéther auquel sont liés quatre blocs élastomères diéniques ou plus.

Le lecteur comprendra que, les macromolécules de l'élastomère diénique modifié répondant aux formules I et II, selon cette variante, au plus 25% en poids de macromolécules branchées par rapport au poids total de l'élastomère diénique modifié, de préférence au moins 80% en poids, répond à la formule I pour laquelle i+j vaut 4 ou plus.

L'élastomère diénique modifié selon une autre variante de réalisation préférée de l'invention, combinables à l'une ou l'autre des deux variantes précédentes ou à la combinaison des deux, comprend au moins 20%, de préférence au moins 35%, en poids de macromolécules branchées à trois branches, par rapport au poids total de l'élastomère diénique modifié, de préférence au moins 40%, les macromolécules à trois branches étant constituées d'un bloc polyéther auquel sont liés trois blocs élastomères diéniques.

Le lecteur comprendra que, les macromolécules de l'élastomère diénique modifié répondant aux formules I et II, selon cette variante, au moins 20%, de préférence au moins 35%, en poids de macromolécules branchées par rapport au poids total de l'élastomère diénique modifié, de préférence au moins 40% en poids, répond à la formule I pour laquelle i+j vaut 3.

Les différentes variantes et aspects préférentiels concernant la nature de l'élastomère diénique modifié, la fonctionnalisation des branches élastomères, leur Mn, la fonction alcoxy, le nombre d'atomes de silicium, le groupement espaceur et le groupement comprenant au moins un atome d'azote, le taux de macromolécules branchées, le taux de macromolécules à trois branches ... sont combinables entre eux sous réserve de leur compatibilité.

Selon des variantes avantageuses de l'invention, l'élastomère diénique modifié comprenant des macromolécules comprenant au sein de leur structure un bloc polyéther linéaire ou ramifié comprenant à chaque extrémité de chaîne un point de branchement auquel est lié jusqu'à trois blocs élastomères diéniques et jusqu'à trois groupements -OR, R représentant, indépendamment les uns des autres, un substituant alkyle en C1-C8 ou un atome d'hydrogène, est tel qu'au moins une des caractéristiques suivantes est respectée, au moins deux, au moins trois, au moins quatre, au moins cinq, au moins six, au moins sept, et de préférence toutes :
- le bloc polyéther est constitué d'unités -(O-R)- , dans lesquelles R est un groupement alcanediyle en C1-C4, plus préférentiellement un groupement éthanediyle ou propanediyle 1,2- ou 1,3-,
- le bloc polyéther présente une masse moléculaire moyenne en nombre sensiblement de 200 à 3000 g/mol
- toutes ou une partie, de préférence au moins 50% molaire, des fonctions alcoxy substituant un ou des atomes de silicium est hydrolysé en hydroxyle ;
- l'élastomère diénique est un copolymère butadiène-styrène ;
- toutes ou une partie, de préférence au moins 70% molaire, des extrémités de branches élastomères non liées à un atome de silicium est fonctionnalisée par rapport au nombre de moles de bout de chaîne, par une fonction amine ;
- la Mn moyenne des branches élastomères est inférieure à 150 000 g/mol, de préférence de 40 000 à 100 000 g/mol ;
- l'élastomère diénique modifié comprend au moins 50% en poids de macromolécules branchées à au moins trois branches ;
- l'élastomère diénique modifié comprend au moins 20% en poids, de préférence au moins 35%, de macromolécules branchées à trois branches.

Selon ces variantes avantageuses de l'invention, l'élastomère diénique modifié peut comprendre, selon un aspect préférentiel, au plus 25% en poids de macromolécules branchées à quatre branches et plus.

L'élastomère diénique modifié selon l'invention peut être obtenu selon un procédé de synthèse comprenant la réaction d'un élastomère diénique vivant, résultant de la polymérisation d'au moins un monomère diène, avec un polyéther fonctionnel, linéaire ou ramifié, de masse moléculaire moyenne en nombre variant de 150 à 5000 g/mol comprenant à chaque extrémité de chaîne un groupement trifonctionnel à base de silicium, réactif vis-à-vis de l'extrémité réactive de l'élastomère vivant, choisi parmi les trialcoxysilyles ou les trihalogénosilyles.

L'invention a également pour objet une composition de caoutchouc à base au moins d'une charge renforçante comprenant un taux de silice supérieur ou égal à 80 pce, de préférence supérieur ou égal à 100 pce, et d'une matrice élastomère comprenant un taux d'un élastomère diénique modifié supérieur ou égal à 75 pce, l'élastomère diénique modifié étant obtenu par ce procédé de synthèse y compris ses aspects particuliers, avantageux et préférentiels décrits ci-après.

L'étape de polymérisation selon l'invention peut être mise en œuvre par polymérisation anionique initiée par exemple au moyen d'un composé organique d'un métal alcalin ou alcalino-terreux. La polymérisation d'au moins un monomère diène conjugué selon ces différentes mises en œuvre génère des chaînes élastomères possédant un site réactif en extrémité de chaîne. On parle alors communément d'élastomère vivant ou de chaîne vivante.

Dans le cadre d'une polymérisation anionique, l'initiateur de polymérisation peut être tout initiateur anionique connu. Toutefois un initiateur contenant un métal alcalin tel que le lithium. Un initiateur contenant un métal alcalin tel que le lithium est utilisé à titre préférentiel. Comme initiateurs organolithiens conviennent notamment ceux comportant au moins une liaison carbone-lithium ou au moins une liaison azote-lithium. Des composés représentatifs sont les organolithiens aliphatiques tels que l'éthyllithium, le n-butyllithium (n BuLi), l'isobutyllithium, et les amidures de lithium obtenus à partir d'une amine secondaire cyclique, telle que la pyrrolidine et l'hexaméthylèneimine. De tels initiateurs de polymérisation anionique sont connus de l'homme de l'art.

La polymérisation peut être effectuée de manière connue en soi. On effectue généralement la polymérisation à des températures comprises entre 0°C et 110°C et de préférence de 40°C à 100°C, voire de 50°C à 90°C. Le procédé de polymérisation peut être mis en œuvre en solution, en milieu plus ou moins concentré ou dilué. Le solvant de polymérisation est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Les monomères utilisables dans le cadre de l'invention sont décrits plus haut.

Afin d'affiner la microstructure des élastomères diéniques, on peut ajouter ou non un agent modifiant et/ou randomisant dans des quantités appropriées. Ceci est de l'ordre des connaissances générales de l'homme du métier.

Ces variantes concernant l'étape de polymérisation sont combinables avec les variantes et aspects préférentiels ou alternatifs décrits ci-après.

La polymérisation d'au moins un monomère diène conjugué selon l'invention génère des chaînes élastomères possédant un site réactif en extrémité de chaîne. Ces chaînes vivantes, ou élastomères vivants, réagissent ensuite sur le polyéther fonctionnel lors de l'étape de modification. Le polyéther fonctionnel comporte des groupements réactifs vis-à-vis du site réactif de l'élastomère, en l'occurrence des groupements alcoxy ou des atomes d'halogène substituant les atomes de silicium.

La quantité de polyéther fonctionnel destiné à réagir avec l'élastomère diénique vivant dépend essentiellement du type d'élastomère diénique modifié voulu.. Ainsi, selon certaines variantes de l'étape de modification, le rapport molaire du polyéther fonctionnel au métal de l'initiateur de polymérisation est d'au moins 0,1, de préférence d'au moins 0,15, plus préférentiellement d'au moins 0,25, et d'au plus 0,45, préférentiellement d'au plus 0,40, voire d'au plus 0,35. Ainsi, selon une variante particulièrement avantageuse de l'étape de modification, le rapport molaire du polyéther fonctionnel au métal de l'initiateur de polymérisation a une valeur allant de de 0,25 à 0,40.

Les conditions d'adjonction et de réaction du polyéther fonctionnel sur l'élastomère sont classiques en matière de modification en polymérisation anionique et connues de l'homme du métier. Ces conditions ne comportent pas de limitations particulières.

Par exemple, cette réaction sur l'élastomère diénique vivant peut se dérouler à une température comprise entre -20°C et 100 °C, par addition du polyéther fonctionnel sur les chaînes élastomères vivantes ou inversement. Cette réaction peut bien sûr être réalisée avec un ou plusieurs polyéthers fonctionnels différents.

Le mélangeage de l'élastomère vivant avec le polyéther fonctionnel peut être réalisé par tout moyen approprié notamment à l'aide de tout mélangeur disposant d'une agitation de type statique et/ou tout mélangeur dynamique de type parfaitement agité connu par l'homme de l'art. Ce dernier détermine le temps de réaction entre le polymère diénique vivant et le polyéther fonctionnel qui peut varier de quelques minutes, par exemple 2 minutes, à plusieurs heures, par exemple 2 heures.

Le polyéther fonctionnel peut être linéaire ou ramifié. Selon une variante de l'invention, le polyéther fonctionnel est un polymère comprenant des unités -(O-R)- , dans lesquelles R est un groupement hydrocarboné divalent, de préférence un groupement aliphatique, linéaire ou ramifié, ayant 1 à 10 atomes de carbone, en particulier un groupement - CH(R') - CH(R") - dans lequel R' et R" sont, indépendamment l'un de l'autre, un atome d'hydrogène ou un substituant alkyle en C1-C4, de préférence R est un groupement alcanediyleen C1-C4, plus préférentiellement un groupement éthanediyle ou propanediyle 1,2- ou 1,3-. On peut ainsi citer le polyoxyméthylène, le poly(oxyde d'éthylène), le poly(oxyde de propylène), ou le polytétrahydrofurane, de préférence le polyéther fonctionnel est issu d'un poly(oxyde d'éthylène) ou poly(oxyde de propylène).

Le polyéther fonctionnel selon l'invention comprend à chacune des deux extrémités de la chaîne principale, un groupement trialcoxysilyle ou trihalogénosilyle.

Lorsque les groupements en extrémité de chaînes sont des trialcoxysilyles, les groupements alcoxy sont acycliques en C1-C18 ou cycliques en C5-C18, ou encore aryloxy en C6 - C18, de préférence des substituants alcoxy acyclique en C1-C8, préférentiellement en C1-C4, de préférence encore méthoxy ou éthoxy.

Lorsque les groupements en extrémité de chaînes sont des trihalogénosilyles, l'atome d'halogène est de préférence le chlore.

Avantageusement, le polyéther fonctionnel présente une masse moléculaire moyenne en nombre de 150 à 5000g/mol, de préférence de 150 à 3000g/mol et plus préférentiellement de 200 à 3000 g/mol. La masse moléculaire moyenne en nombre est calculée par la technique SEC (Size Exclusion Chromatography) décrite plus loin.

Selon une variante de l'invention, le polyéther fonctionnel peut être représenté par la formule III suivante : 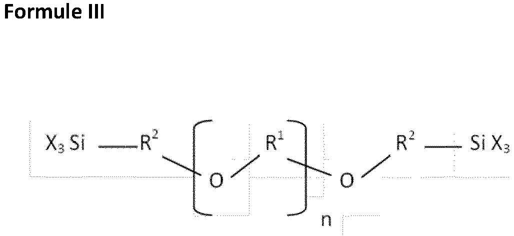 dans laquelle,
- R1 représente un groupement hydrocarboné divalent, de préférence un groupement aliphatique, linéaire ou ramifié, , en C1-C10, en particulier un groupement - CH(R') - CH(R'') - dans lequel R' et R" sont, indépendamment l'un de l'autre, un atome d'hydrogène ou un substituant alkyle en C1-C4, de préférence R1 est un groupement alcanediyle, linéaire en C1-C4, plus préférentiellement un groupement éthanediyle ou propanediyle 1,2- ou 1,3-,
- les R2 représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10, de préférence 3 à 8,
- les X représentent, de manière identique ou différente, un atome d'halogène, de préférence Cl, ou un groupe de formule - OR3 dans laquelle les R3 représentent indépendamment les uns des autres, un substituant alkyle en C1 -C18, cycloalkoxyle en C5-C18 ou aryle en C6 - C18, de préférence les R3 représentent un substituant alkyle en C1-C8, préférentiellement C1-C4, de préférence encore méthyle ou éthyle,
- n est un nombre supérieur à 1, de manière à ce que le bloc polyéther ait une masse moléculaire moyenne en nombre sensiblement de 150 à 5000 g/mol de préférence de 150 à 3000g/mol et plus préférentiellement de 200 à 3000 g/mol.

Parmi les polyéthers fonctionnels répondant à la formule III, on peut citer par exemple le poly(oxy-1,2-ethanediyl)-α-[3-(triethoxysilyl)propyl]-ω-[3-(triethoxysilyl)propoxy], le poly(oxy-1,2-ethanediyl)-α-[3-(trimethoxysilyl)propyl]-ω-[3-(trimethoxysilyl)propoxy], le poly[oxy(methyl-1,2-ethanediyl)]-α-[3-(trichlorosilyl)propyl]-ω-[3-(trichlorosilyl)propoxy].

Le polyéther fonctionnel peut être soit trouvé dans le commerce, soit préparé selon des méthodes décrites dans la littérature consistant par exemple à réaliser une première réaction d'allylation d'un polyéthylène glycol en présence de bromure d'allyle et d'une base telle que l'hydroxyde de potassium, soit en solution aqueuse, soit dans un milieu biphasique soit encore dans un solvant organique comme le tétrahydrofurane puis une réaction d'hydrosilylation par exemple en utilisant un catalyseur au platine tel que le complexe platine(0)-1,3-divinyl-1,1,3,3-tetramethyldisiloxane ou l'acide hexachloroplatinique, en présence d'un trihalogénosilane tel que notamment le trichlorosilane ou encore un trialkoxysilane tel que notamment le triméthoxysilane ou le triéthoxysilane, en présence ou en l'absence de solvant.

Lorsque les atomes de silicium du polyéther fonctionnel porte des sites réactifs halogénés, le procédé de synthèse du copolymère diénique modifié selon l'invention se poursuit généralement par une étape d'hydrolyse ou d'alcoolyse connue en soi permettant de générer des fonctions silanol Si-OH ou alkoxysilane Si-OR à partir de ces sites actifs halogénés n'ayant pas réagi avec l'élastomère vivant. Cette étape d'hydrolyse ou d'alcoolyse peut être réalisée en ajoutant la solution de polymère à une solution aqueuse ou à une solution contenant un alcool ou à l'inverse, en ajoutant l'eau ou l'alcool à la solution de polymère. Cette étape pourra être réalisée ou non en présence d'une base ou d'un tampon. A titre d'exemple on pourra utiliser une amine telle que la triéthylamine.

Lorsque les atomes de silicium du polyéther fonctionnel porte des sites réactifs alcoxysilyles, le procédé de synthèse du copolymère diénique modifié selon l'invention peut comprendre une étape d'hydrolyse des fonctions alcoxysilyles hydrolysables n'ayant pas réagi avec l'élastomère vivant, par adjonction d'un composé acide, basique ou neutre tel que décrit dans le document EP 2 266 819 A1. Les fonctions alcoxysilyles hydrolysables sont alors transformées en fonction silanol.

Le procédé de synthèse du copolymère diénique modifié peut se poursuivre de manière connue en soi par les étapes de récupération du copolymère.

Ces étapes peuvent comprendre une étape de stripping en vue de récupérer le copolymère diénique modifié issu des étapes antérieures sous forme sèche. Cette étape de stripping peut avoir pour effet d'hydrolyser tout ou partie des fonctions alcoxysilyles hydrolysables résiduelles du copolymère à blocs pour les transformer en fonctions silanol. Avantageusement, au moins 50 à 70% molaire des fonctions alcoxysilyles hydrolysables résiduelles peuvent ainsi être hydrolysées.

Conformément à l'invention, la composition de caoutchouc comprend une matrice élastomère comprenant au moins 75 pce d'élastomère diénique modifié tel que décrit ci-dessus, de préférence au moins 80 pce, et plus préférentiellement encore 100 pce d'élastomère diénique modifié. L'élastomère diénique modifié peut être constitué d'un mélange de plusieurs élastomères diéniques modifiés tels que décrits plus haut.

Selon une variante de l'invention, la matrice élastomère peut comprendre également moins de 25 pce, de préférence moins de 20 pce, d'au moins un élastomère diénique différent de l'élastomère diénique modifié décrit plus haut. A titre d'élastomère diénique complémentaire, on peut citer tout élastomère diénique qu'il soit naturel ou synthétique. En particulier, l'élastomère diénique peut être choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

Conformément à l'invention, la composition de caoutchouc comprend également au moins 80 pce de silice, préférentiellement au moins 100 pce, et de préférence au plus 200 pce, plus préférentiellement au plus 150 pce, le taux optimal étant de manière connue différent selon les applications particulières visées.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g, encore plus préférentiellement entre 130 et 300 m²/g, voire entre 130 et 250 m²/g.

On peut utiliser outre la silice, tout autre type de charge renforçante connue pour ses capacités à renforcer une composition de caoutchouc utilisable pour la fabrication de bandes de roulement de pneus, par exemple du noir de carbone ou une autre charge inorganique renforçante, ou encore un mélange de ces charges.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneus (noirs dits de grade pneu). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneus; une telle charge se caractérise généralement, de manière connue, par la présence de groupes hydroxyle (-OH) à sa surface.

Comme charges inorganiques renforçantes conviennent notamment des charges minérales du type siliceux, outre la silice (SiO2), ou du type alumineux ou encore les oxydes de titane renforçants, par exemple décrits dans US 6 610 261 et US 6 747 087. Parmi les charges minérales du type alumineux, on peut citer en particulier l'alumine (Al2O3) ou les (oxyde)hydroxydes d'aluminium.

Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneus tels que décrits par exemple dans les documents brevet WO 96/37547, WO 99/28380.

L'état physique sous lequel se présente la charge inorganique renforçante, y compris la silice, est indifférent, que ce soit sous forme de poudre, de microperles, de granulés, de billes ou toute autre forme densifiée appropriée. Bien entendu, on entend également par charge renforçante des mélanges de différentes charges renforçantes, en particulier de charges siliceuses hautement dispersibles telles que décrites précédemment.

Selon une variante avantageuse de l'invention, la charge renforçante est majoritairement de la silice, de préférence elle comprend plus de 50% en poids du poids total de la charge renforçante de silice.

Selon cette variante, lorsque du noir de carbone est également présent, il peut être utilisé à un taux inférieur à 20 pce, plus préférentiellement inférieur à 10 pce, et à un taux supérieur à 0,5 pce, notamment supérieur ou égal à 1.

L'utilisation de la silice comme charge renforçante peut nécessiter l'utilisation d'un agent de couplage pour établir la liaison entre la charge et l'élastomère. On peut alors utiliser comme agents de couplage des organosilanes, notamment des alkoxysilanes polysulfurés ou des mercaptosilanes, ou encore des polyorganosiloxanes au moins bifonctionnels

Lorsque la composition selon l'invention comprend un agent de couplage, sa quantité dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone, préférentiellement de 6% à 12% en poids.

La composition de caoutchouc selon l'invention peut également contenir, en complément des agents de couplage, des activateurs de couplage, des agents de recouvrement des charges ou plus généralement des agents d'aide à la mise en œuvre susceptibles de manière connue, grâce à une amélioration de la dispersion de la charge dans la matrice élastomère et à un abaissement de la viscosité de la composition, d'améliorer sa faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention peut également contenir au moins un plastifiant. De manière connue de l'homme du métier des compositions de caoutchouc pour pneu, ce plastifiant est de préférence choisi parmi les résines hydrocarbonées de haute température de transition vitreuse (Tg), les résines hydrocarbonées de faible Tg, les huiles plastifiantes, et leurs mélanges. De préférence, le plastifiant est choisi parmi les résines hydrocarbonées de haute Tg, les huiles plastifiantes, et leurs mélanges.

Selon une variante avantageuse de l'invention, le taux total de plastifiant dans la composition est supérieur ou égal à 20 pce, plus préférentiellement supérieur ou égal à 50 pce, et avantageusement d'au plus 100 pce.

Par définition, une résine hydrocarbonée de haute Tg est par définition un solide à température et pression ambiante (20°C, 1 atm), tandis qu'une huile plastifiante est liquide à température ambiante et qu'une résine hydrocarbonée de faible Tg est visqueuse à température ambiante. La Tg est mesurée selon la norme ASTM D3418 (1999).

De manière connue, les résines hydrocarbonées de haute Tg sont des résines hydrocarbonées, thermoplastiques, dont la Tg est supérieure à 20°C. Les résines hydrocarbonées de haute Tg préférentielles utilisables dans le cadre de l'invention, sont bien connues de l'homme du métier et disponibles commercialement, Le plastifiant peut contenir également une huile plastifiante (ou huile d'extension) liquide à 20 °C, dit à « basse Tg », c'est-à-dire qui par définition présente une Tg inférieure à 20 °C, de préférence inférieure à 40 °C.

Toute huile d'extension, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante.

Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

La composition de caoutchouc conforme à l'invention peut comporter également tout ou partie des additifs et agents de mise en œuvre usuels, connus de l'homme du métier et habituellement utilisés dans les compositions de caoutchouc pour pneus, en particulier des compositions de caoutchouc de bandes de roulement, comme par exemple, des charges non renforçantes, des pigments, des agents de protection tels que cires anti-ozone, anti-ozonants chimiques, anti-oxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

La composition de caoutchouc conforme à l'invention est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomère, les charges, les éventuels autres additifs divers, à l'exception du système de réticulation. L'incorporation de la charge à l'élastomère peut être réalisée en une ou plusieurs fois en malaxant thermo-mécaniquement. La phase non-productive est réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement de pneu pour véhicule.

La composition peut être soit à l'état cru (avant réticulation ou vulcanisation), soit à l'état cuit (après réticulation ou vulcanisation), peut être un produit semi-fini qui peut être utilisé dans un pneu

La réticulation de la composition peut être conduite de manière connue de l'homme du métier, par exemple à une température comprise entre 130°C et 200°C, sous pression.

En raison du maintien du compromis de propriétés hystérèse / mise en œuvre à cru malgré un taux de charge élevé qui caractérise une composition de caoutchouc renforcée selon l'invention, on notera qu'une telle composition peut constituer tout produit semi-fini du pneu et tout particulièrement la bande de roulement, diminuant notamment sa résistance au roulement, tout améliorant ses performances liées au taux de charge renforçante élevé.

L'invention a donc enfin pour objet un pneu comportant un article semi-fini constitué en tout ou en partie d'une composition selon l'invention, en particulier une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### I - Mesures et tests utilisés

### Détermination de la valeur de la Mn de la branche avant couplage ou étoilage par chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45µm avant injection.

L'appareillage utilisé est une chaîne chromatographique "WATERS alliance". Le solvant d'élution est le tétrahydrofurane, le débit de 1 mL.min-1, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

**Détermination des taux de macromolécules linéaires et macromolécules branchées par la technique de chromatographie d'exclusion stérique haute résolution (SEC haute résolution).**

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45 µm avant injection.

L'appareillage utilisé est une chaîne chromatographique "WATERS alliance 2695". Le solvant d'élution est le tétrahydrofurane, le débit de 0,2 ml.min-1, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 µL. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

### Détermination de la viscosité Mooney

Pour les polymères et les compositions de caoutchouc, les viscosités Mooney ML(1+4)100 °C sont mesurées selon la norme ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).

### Détermination de la température de transition vitreuse des polymères

Les températures de transition vitreuse (Tg) des élastomères sont déterminées à l'aide d'un calorimètre différentiel ("differential scanning calorimeter") selon la norme ASTM D3418.

### Propriétés dynamiques

Les propriétés dynamiques, et en particulier tan δ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse.

### II - Exemples de préparation des élastomères

### Préparation du polymère A : Copolymère diénique à blocs - témoin

Dans un réacteur de 90 litres, maintenu sous une pression d'azote d'environ 2 bars, contenant 44 kg de méthylcyclohexane, sont injectés 1.74 kg de styrène et 5.84 kg de butadiène ainsi que 1.07L d'une solution de tetrahydrofurane à 0.36 mol.L-1 dans le méthylcyclohexane. Après neutralisation des impuretés dans la solution à polymériser par addition de n-butyllithium, sont ajoutés 716 mL de n-butyllithium à 0.06 mol.L-1 dans le méthylcyclohexane. La polymérisation est conduite à 50 °C.

Après 45 minutes, le taux de conversion des monomères atteint 68%. Ce taux est déterminé par pesée d'un extrait séché à 140 °C, sous la pression réduite de 200 mmHg. La valeur de la Mn branche avant couplage déterminée par SEC RI est de 120 000 g.mol-1. 1.19L d'une solution de poly(oxy-1,2-ethanediyl)-α-[3-(triethoxysilyl)propyl]-ω-[3-(triethoxysilyl)propoxy] (CAS 666829-33-0) à 0.018 mol.L-1 dans le toluène sont alors ajoutés (npoly(oxy-1,2-ethanediyl)-α-[3-(triethoxysilyl)propyl]-m-[3-(triethoxysilyl)propoxy]) / n(n-butyllithium) = 0.5). La solution est agitée à une température de 50°C pendant 30minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 70.

La répartition des espèces 1 branche, 2 branches, 3 branches, 4 branches, 5 branches et 6 branches (1b/2b/3b/4b/5b/6b) déterminée par SEC haute résolution est la suivante : 16/72/6/4/3/0.

La température de transition vitreuse de ce copolymère est de - 63 °C.

### Préparation du polymère B : Copolymère diénique à blocs selon l'invention

Dans un réacteur de 90 litres, maintenu sous une pression d'azote d'environ 2 bars, contenant 44 kg de méthylcyclohexane, sont injectés 1.74 kg de styrène et 5.84 kg de butadiène ainsi que 1.02L d'une solution de tetrahydrofurane à 0.36 mol.L-1 dans le méthylcyclohexane. Après neutralisation des impuretés dans la solution à polymériser par addition de n-butyllithium, sont ajoutés 1.1mL de n-butyllithium à 0.06mol.L-1 dans le méthylcyclohexane. La polymérisation est conduite à 50°C.

Après 45minutes, le taux de conversion des monomères atteint 70%. Ce taux est déterminé par pesée d'un extrait séché à 140 °C, sous la pression réduite de 200 mmHg. 1. La valeur de la Mn branche avant couplage déterminée par SEC RI est de 81 000 g.mol-1. 37L d'une solution de poly(oxy-1,2-ethanediyl)-α-[3-(triethoxysilyl)propyl]-ω-[3-(triethoxysilyl)propoxy] (CAS 666829-33-0) à 0.018 mol.L-1 dans le toluène sont alors ajoutés (npoly(oxy-1,2-ethanediyl)-α-[3-(triethoxysilyl)propyl]-ω-[3-(triethoxysilyl)propoxy]) / n(n-butyllithium) = 0.35). La solution est agitée à une température de 50°C pendant 15minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 44.

La répartition des espèces 1 branche, 2 branches, 3 branches, 4 branches, 5 branches et 6 branches (1b/2b/3b/4b/5b/6b) déterminée par SEC haute résolution est la suivante : 12/29/21/38/0/0.

La température de transition vitreuse de ce copolymère est de - 64 °C.

### Exemples de préparations des compositions de caoutchouc

Les élastomères A et B ont été utilisés pour la préparation de compositions de caoutchouc de type bande de roulement, comprenant chacune de la silice à titre de charge renforçante selon deux formulations différentes.

Chacune des compositions suivantes est réalisée, dans un premier temps, par un travail thermomécanique, puis, dans un second temps de finition, par un travail mécanique, selon des procédés usuels de préparation de mélange de caoutchouc.

On introduit successivement, dans un mélangeur interne de laboratoire de type "Banbury', dont la capacité est de 400 cm3, qui est rempli à 70% et dont la température initiale est d'environ 90°C, l'élastomère, les deux tiers de la silice, le noir, l'agent de couplage et l'huile, puis, environ une minute plus tard, le reste de la charge renforçante, la résine, l'antioxydant, l'acide stéarique et la cire anti-ozone, puis, environ deux minutes plus tard le monoxyde de zinc.

On conduit l'étape de travail thermomécanique pendant 4 à 5 minutes, jusqu'à une température maximale de tombée de 160°C environ.

Le premier temps précité de travail thermomécanique est ainsi réalisé, étant précisé que la vitesse moyenne des palettes lors de ce premier temps est de 50 t/min.

On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Chacune des compositions présente la formulation suivante (exprimée en pce : parties pour cent parties d'élastomère) :

**Tableau 1**

| Ingrédients | Formulation 1 | Formulation 2 |
|---|---|---|
| Polymère | 100 | 100 |
| Silice | 110 | 70 |
| Noir de carbone | 3 | 3 |
| huile | 13 | 0 |
| Résine | 59 | 46 |
| Agent de couplage | 8.8 | 5.6 |
| Acide stéarique | 3 | 3 |
| Oxyde de Zinc | 1.5 | 1.5 |
| DPG | 2.3 | 1.5 |
| Soufre soluble | 1 | 1 |
| Accélérateur | 2.3 | 2.3 |
| Antioxydant | 3 | 3 |

| | | |
|---|---|---|
| Silice : "Zeosil 1165MP" de Rhodia, de type HDS. Noir de carbone : grade ASTM N234 de la société Cabot Corporation Huile : Huile de tournesol à 85 % en poids d'acide oléique, « Lubrirob Tod 1880 » de la société Novance Résine : résine DCPD aromatique, Escorez 5600 ou PR383, de la société ExxonMobil Agent de couplage : Silane TESPT Si69, de Degussa DPG : Diphénylguanidine (« Perkacit » DPG de la société Flexsys) Accélérateur : CBS : N-cylohexyl-2-benzothiazol-sulfénamide (« Santocure CBS » de la société Flexsys) Antioxydant : N-(1,3-diméthylbutyl)-N'-phényl-p-phénylènediamine, de la société Flexsys | | |

### Résultats:

Les résultats présentés dans le tableau ci-dessous montrent :
- Que l'élastomère selon l'invention améliore le compromis hystérèse/Mooney composition par rapport à l'élastomère de référence, que ce soit dans l'une ou l'autre des deux Formulations.
- Que l'élastomère selon l'invention améliore particulièrement le compromis lorsqu'il est utilisé dans une composition contenant un fort taux de silice (Formulation 1).

**Tableau 2**

| polymère | | formulation 1 | | |
|---|---|---|---|---|
| | | tan delta max 23°C | Mooney composition | indice de performance |
| A | témoin | 100 | 100 | 1.0 |
| B | invention | 102 | 65 | 1.5 |

**Tableau 3**

| polymère | | formulation 2 | | |
|---|---|---|---|---|
| | | tan delta max 23°C | Mooney composition | indice de performance |
| A | témoin | 100 | 100 | 1.0 |
| B | invention | 112 | 64 | 1.4 |

Dans le tableau ci-dessus, les valeurs de tan delta ou de Mooney sont exprimées en base 100 par rapport au témoin.

L'indice de performance est calculé comme : 10000 / (valeur de tan delta * valeur de Mooney composition). Plus le tan delta est faible, plus le Mooney composition est faible, meilleur est le compromis de performance résistance au roulement / mise en œuvre.

## Revendications

1. Composition de caoutchouc à base au moins d'une charge renforçante comprenant de la silice et d'une matrice élastomère comprenant un élastomère diénique modifié, **caractérisée en ce que**
- le taux de silice est supérieur ou égal à 80 pce, de préférence supérieur ou égal à 100 pce ;
- le taux d'élastomère diénique modifié est supérieur ou égal à 75 pce, et
- l'élastomère diénique modifié comprend des macromolécules comprenant au sein de leur structure un bloc polyéther, linéaire ou ramifié, comprenant à chacune des deux extrémités du bloc un point de branchement auquel sont liés jusqu'à trois branches élastomères diéniques et jusqu'à trois groupements -OR, R représentant, indépendamment les uns des autres, un substituant alkyle en C₁-C₈ ou un atome d'hydrogène,
a- le copolymère présentant une viscosité Mooney, mesurée selon la norme ASTM D1646, d'au moins 30, de préférence d'au moins 40, et d'au plus 100,
b- le copolymère étant composé
- d'au moins 20%, de préférence au moins 30%, de macromolécules branchées comprenant un bloc polyéther auquel sont liés au moins trois blocs élastomères diéniques,
- d'au plus 80%, de préférence au plus 70%, de macromolécules linéaires,
c - le bloc polyéther présentant une masse moléculaire moyenne en nombre variant de 150 à 5000 g/mol, et
d - chacun des points de branchement étant constitué d'un atome de silicium;
les macromolécules branchées répondant à la formule I: 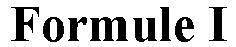 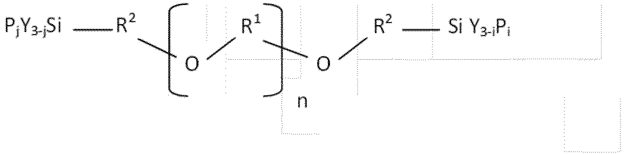 dans laquelle,
R¹ représente un groupement hydrocarboné divalent, linéaire ou ramifié, en C₁-C₁₀, en particulier un groupement - CH(R') - CH(R") - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10, de préférence 3 à 8 ;
les Y représentent, de manière identique ou différente, un atome d'halogène ou un groupe de formule - OR⁴ dans laquelle les R⁴ représentent indépendamment les uns des autres, un atome d'hydrogène, un substituant alkyle en C₁ - C₈, de préférence les R⁴ représentent un atome d'hydrogène ou un substituant alkyle C₁-C₄, de préférence méthyle ou éthyle,
i et j sont des nombres valant chacun indépendamment de l'autre 1, 2 ou 3, sous réserve que (i+j) varie de 3 à 6, et
P représente un bloc élastomère diénique ;
et les macromolécules linéaires à blocs répondant à la formule II: 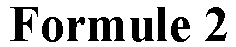 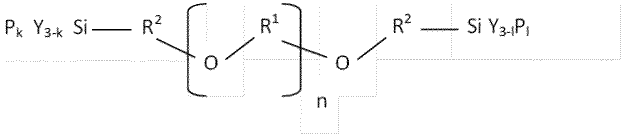 dans laquelle,
R¹ représente un groupement hydrocarboné divalent, linéaire ou ramifié, en C₁-C₁₀, en particulier un groupement - CH(R') - CH(R") - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10, de préférence 3 à 8 ;
les Y représentent, de manière identique ou différente, un atome d'halogène ou un groupe de formule - OR⁴ dans laquelle les R⁴ représentent indépendamment les uns des autres, un atome d'hydrogène, un substituant alkyle en C₁ - C₈, de préférence les R⁴ représentent un atome d'hydrogène ou un substituant alkyle C₁-C₄, de préférence méthyle ou éthyle,
k et 1 sont des nombres valant chacun indépendamment de l'autre 0 ou 1, sous réserve que (k+l) vaut 1 ou 2, et
P représente un bloc élastomère diénique.

2. Composition selon la revendication 1, **caractérisée en ce que** l'élastomère diénique modifié est un polybutadiène ou un copolymère de butadiène, préférentiellement un copolymère de butadiène-styrène.

3. Composition selon la revendication 1 ou 2, **caractérisée en ce que** les branches élastomères de l'élastomère diénique modifié ont une masse molaire moyenne en nombre (Mn) d'au moins 40 000 g/mol et d'au plus 100 000 g/mol.

4. Composition selon l'une quelconque des revendications 1 à 3, **caractérisée en ce que** l'extrémité des branches élastomères non liée à un atome de silicium, porte une fonction comprenant un atome d'azote, de préférence une fonction amine, cyclique ou acyclique.

5. Composition selon l'une quelconque des revendications 1 à 4, **caractérisée en ce que** le bloc polyéther est un bloc polyoxyméthylène, poly(oxyde d'éthylène) poly(oxyde de propylène), ou polytétrahydrofurane, de préférence un bloc poly(oxyde d'éthylène) ou poly(oxyde de propylène).

6. Composition selon l'une quelconque des revendications 1 à 5, **caractérisée en ce que** le copolymère comprend au moins 50% en poids de macromolécules branchées constitué d'un bloc polyéther auquel sont liés au moins trois blocs élastomères diéniques.

7. Composition selon l'une quelconque des revendications 1 à 6, **caractérisée en ce que** le copolymère comprend au moins 20% en poids, de préférence au moins 35%, de macromolécules branchées constitué d'un bloc polyéther auquel sont liés trois blocs élastomères diéniques.

8. Composition selon l'une quelconque des revendications 1 à 7, **caractérisée en ce que** le copolymère comprend au plus 25% de macromolécules branchées constitué d'un bloc polyéther auquel sont liés quatre blocs élastomères diéniques ou plus.

9. Composition selon l'une quelconque des revendications 1 à 8, **caractérisée en ce que** qu'au moins une des caractéristiques suivantes est respectée, au moins deux, au moins trois, au moins quatre, au moins cinq, au moins six, au moins sept et de préférence toutes :
- le bloc polyéther est linéaire constitué d'unités -(O-R)- , dans lesquelles R est un groupement alcanediyle en C₁-C₄, plus préférentiellement un groupement éthanediyle ou propanediyle 1,2- ou 1,3-,
- le bloc polyéther présente une masse moléculaire moyenne en nombre sensiblement de 200 à 3000 g/mol ;
- toutes ou une partie, de préférence au moins 50% molaire, des fonctions alcoxy substituant un ou des atomes de silicium est hydrolysé en hydroxyle ;
- l'élastomère diénique est un copolymère butadiène-styrène,
- toutes ou une partie, de préférence au moins 70% molaire des extrémités de branches élastomères non liées à un atome de silicium est fonctionnalisée par rapport au nombre de moles de bout de chaîne, par une fonction amine
- la Mn moyenne des branches élastomères est inférieure à 150 000 g/mol, de préférence de 40 000 à 100 000 g/mol ;
- l'élastomère diénique modifié comprend au moins 50% en poids de macromolécules branchées à au moins trois branches ;
- l'élastomère diénique modifié comprend au moins 20% en poids de macromolécules branchées à trois branches, de préférence au moins 35%.

10. Composition selon l'une quelconque des revendications 1 à 9, **caractérisée en ce que** le taux de silice est supérieur ou égal à 100 pce.

11. Composition selon l'une quelconque des revendications 1 à 10, **caractérisée en ce qu'**elle comprend 20 pce ou plus, de préférence 50 pce ou plus, d'au moins un plastifiant.

12. Composition selon la revendication 11, **caractérisée en ce que** le plastifiant est choisi parmi les résines hydrocarbonées de haute Tg, les huiles plastifiantes et leurs mélanges.

13. Pneu comportant un article semi-fini constitué en tout ou en partie d'une composition selon l'une quelconque des revendications 1 à 12.

## Patentansprüche

1. Kautschukzusammensetzung auf Basis von mindestens einem verstärkenden Füllstoff, der Kieselsäure umfasst, und einer Elastomermatrix, die ein modifiziertes Dienelastomer umfasst, **dadurch gekennzeichnet, dass**
- der Gehalt an Kieselsäure größer als oder gleich 80 phr, vorzugsweise größer als oder gleich 100 phr, ist;
- der Gehalt an modifiziertem Dienelastomer größer als oder gleich 75 phr ist und
- das modifizierte Dienelastomer Makromoleküle umfasst, die in ihrer Struktur einen geradkettigen oder verzweigten Polyetherblock umfassen, der an jedem der beiden Enden des Blocks eine Verzweigungsstelle umfasst, an der bis zu drei Dienelastomer-Arme und bis zu drei - OR-Gruppen gebunden sind, wobei R unabhängig voneinander für einen C₁-C₈-Alkylsubstituenten oder ein Wasserstoffatom steht,
a- das Copolymer eine gemäß der Norm ASTM D1646 gemessene Mooney-Viskosität von mindestens 30, vorzugsweise mindestens 40 und höchstens 100, aufweist,
b- das Copolymer aus Folgendem besteht:
- mindestens 20 %, vorzugsweise mindestens 30 %, verzweigten Makromolekülen, die einen Polyetherblock umfassen, an dem mindestens drei Dienelastomerblöcke gebunden sind,
- höchstens 80 %, vorzugsweise höchstens 70 %, geradkettigen Makromolekülen,
c- der Polyetherblock ein Zahlenmittel der Molmasse von 150 bis 5000 g/mol aufweist und
d- jede der Verzweigungsstellen aus einem Siliciumatom besteht;
wobei die verzweigten Makromoleküle der Formel I: 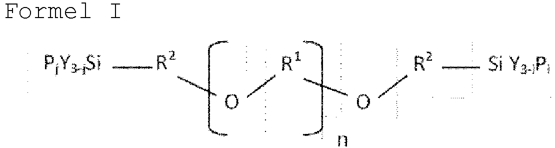
entsprechen, in der
R¹ für eine geradkettige oder verzweigte zweiwertige C₁-C₁₀-Kohlenwasserstoffgruppe, insbesondere eine -CH(R')-CH(R")--Gruppe, steht, wobei R' und R" unabhängig voneinander ein Wasserstoffatom oder ein C₁-C₄-Alkylsubstituent sind, R¹ vorzugsweise eine C₁-C₄-Alkandiyl-Gruppe, stärker bevorzugt eine Ethandiyl- oder 1,2- oder 1,3-Propandiylgruppe, ist,
die R² unabhängig voneinander für eine zweiwertige Kohlenwasserstoffgruppe, vorzugsweise eine aliphatische, geradkettige oder verzweigte oder cyclische, gesättigte oder ungesättigte Gruppe mit 1 bis 50 Kohlenstoffatomen, vorzugsweise eine geradkettige aliphatische, vorzugsweise gesättigte Gruppe mit vorzugsweise 1 bis 15, vorzugsweise 2 bis 10, vorzugsweise 3 bis 8, Kohlenstoffatomen stehen;
die Y, die identisch oder verschieden sein können, für ein Halogenatom oder eine Gruppe der Formel -OR⁴ stehen, wobei die R⁴ unabhängig voneinander für ein Wasserstoffatom, einen C₁-C₈-Alkylsubstituenten stehen, wobei die R⁴ vorzugsweise für ein Wasserstoffatom oder einen C₁-C₄-Alkylsubstituenten, vorzugsweise Methyl oder Ethyl, stehen,
i und j Zahlen sind, die jeweils unabhängig voneinander 1, 2 oder 3 betragen, mit der Maßgabe, dass (i+j) von 3 bis 6 reicht, und
P für einen Dienelastomerblock steht;
und die geradkettigen Block-Makromoleküle der Formel II: 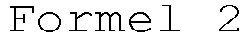 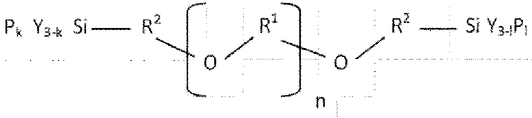
entsprechen, in der
R¹ für eine geradkettige oder verzweigte zweiwertige C₁-C₁₀-Kohlenwasserstoffgruppe, insbesondere eine -CH(R')-CH(R")--Gruppe, steht, wobei R' und R" unabhängig voneinander ein Wasserstoffatom oder ein C₁-C₄-Alkylsubstituent sind, R¹ vorzugsweise eine C₁-C₄-Alkandiyl-Gruppe, stärker bevorzugt eine Ethandiyl- oder 1,2- oder 1,3-Propandiylgruppe, ist,
die R² unabhängig voneinander für eine zweiwertige Kohlenwasserstoffgruppe, vorzugsweise eine aliphatische, geradkettige oder verzweigte oder cyclische, gesättigte oder ungesättigte Gruppe mit 1 bis 50 Kohlenstoffatomen, vorzugsweise eine geradkettige aliphatische, vorzugsweise gesättigte Gruppe mit vorzugsweise 1 bis 15, vorzugsweise 2 bis 10, vorzugsweise 3 bis 8, Kohlenstoffatomen stehen;
die Y, die identisch oder verschieden sein können, für ein Halogenatom oder eine Gruppe der Formel -OR⁴ stehen, wobei die R⁴ unabhängig voneinander für ein Wasserstoffatom, einen C₁-C₈-Alkylsubstituenten stehen, wobei die R⁴ vorzugsweise für ein Wasserstoffatom oder einen C₁-C₄-Alkylsubstituenten, vorzugsweise Methyl oder Ethyl, stehen,
k und l Zahlen sind, die jeweils unabhängig voneinander 0 oder 1 betragen, mit der Maßgabe, dass (k+l) von 1 bis 2 reicht, und
P für einen Dienelastomerblock steht.

2. Zusammensetzung nach Anspruch 1, **dadurch gekennzeichnet, dass** es sich bei dem modifizierten Dienelastomer um ein Polybutadien oder ein Butadien-Copolymer, vorzugsweise ein Butadien-Styrol-Copolymer, handelt.

3. Zusammensetzung nach Anspruch 1 oder 2, **dadurch gekennzeichnet, dass** die Elastomerarme des modifizierten Dienelastomers ein Zahlenmittel der Molmasse (Mn) von mindestens 40 000 g/mol und höchstens 100 000 g/mol aufweisen.

4. Zusammensetzung nach einem der Ansprüche 1 bis 3, **dadurch gekennzeichnet, dass** das Ende der Elastomer-Arme, das nicht an ein Siliciumatom gebunden ist, eine ein Stickstoffatom umfassende Funktion, vorzugsweise eine cyclische oder acyclische Aminfunktion, trägt.

5. Zusammensetzung nach einem der Ansprüche 1 bis 4, **dadurch gekennzeichnet, dass** der Polyetherblock ein Polyoxymethylen-, Poly(ethylenoxid)-, Poly(propylenoxid)- oder Polytetrahydrofuranblock, vorzugsweise ein Poly(ethylenoxid)- oder Poly(propylenoxid)-Block, ist.

6. Zusammensetzung nach einem der Ansprüche 1 bis 5, **dadurch gekennzeichnet, dass** das Copolymer mindestens 50 Gew.-% verzweigte Makromoleküle umfasst, die aus einem Polyetherblock bestehen, an dem mindestens drei Dienelastomerblöcke gebunden sind.

7. Zusammensetzung nach einem der Ansprüche 1 bis 6, **dadurch gekennzeichnet, dass** das Copolymer mindestens 20 Gew.-%, vorzugsweise mindestens 35 Gew.-%, verzweigte Makromoleküle umfasst, die aus einem Polyetherblock bestehen, an dem mindestens drei Dienelastomerblöcke gebunden sind.

8. Zusammensetzung nach einem der Ansprüche 1 bis 7, **dadurch gekennzeichnet, dass** das Copolymer höchstens 25 % verzweigte Makromoleküle umfasst, die aus einem Polyetherblock bestehen, an dem vier oder mehr Dienelastomerblöcke gebunden sind.

9. Zusammensetzung nach einem der Ansprüche 1 bis 8, **dadurch gekennzeichnet, dass** mindestens eines, mindestens zwei, mindestens drei, mindestens vier, mindestens fünf, mindestens sechs, mindestens sieben und vorzugsweise alle der folgenden Merkmale eingehalten werden:
- der Polyetherblock ist geradkettig, wobei er aus - (O-R)--Einheiten besteht, bei denen R eine C₁-C₄-Alkandiylgruppe, stärker bevorzugt eine Ethandiyl- oder 1,2- oder 1,3-Propandiylgruppe, ist,
- der Polyetherblock weist im Wesentlichen ein Zahlenmittel der Molmasse von 200 bis 3000 g/mol auf;
- alle oder ein Teil, vorzugsweise mindestens 50 Mol-%, der Alkoxyfunktionen, die ein Siliciumatom oder Siliciumatome substituieren, sind zu Hydroxyl hydrolysiert;
- das Dienelastomer ist ein Butadien-Styrol-Copolymer;
- alle oder ein Teil, vorzugsweise mindestens 70 Mol-%, der Enden der Elastomer-Arme, die nicht an ein Siliciumatom gebunden sind, sind in Bezug auf die Molzahl des Kettenendes durch eine Aminfunktion funktionalisiert;
- das mittlere Mn der Elastomer-Arme ist kleiner als 150 000 g/mol, beträgt vorzugsweise 40 000 bis 100 000 g/mol,
- das modifizierte Dienelastomer umfasst mindestens 50 Gew.-% verzweigte Makromoleküle mit mindestens drei Armen;
- das modifizierte Dienelastomer umfasst mindestens 20 Gew.-%, vorzugsweise mindestens 35 Gew.-%, verzweigte Makromoleküle mit drei Armen.

10. Zusammensetzung nach einem der Ansprüche 1 bis 9, **dadurch gekennzeichnet, dass** der Gehalt an Kieselsäure größer als oder gleich 100 phr ist.

11. Zusammensetzung nach einem der Ansprüche 1 bis 10, **dadurch gekennzeichnet, dass** sie 20 phr oder mehr, vorzugsweise 50 phr oder mehr, mindestens eines Weichmachers umfasst.

12. Zusammensetzung nach Anspruch 11, **dadurch gekennzeichnet, dass** der Weichmacher aus Kohlenwasserstoffharzen mit einer hohen Tg, Weichmacherölen und Mischungen davon ausgewählt ist.

13. Reifen, der ein Halbzeug umfasst, das ganz oder teilweise aus einer Zusammensetzung nach einem der Ansprüche 1 bis 12 besteht.

## Claims

1. Rubber composition based at least on a reinforcing filler comprising silica and on an elastomer matrix comprising a modified diene elastomer, **characterized in that**:
- the content of silica is greater than or equal to 80 phr, preferably greater than or equal to 100 phr,
- the content of modified diene elastomer is greater than or equal to 75 phr, and
- the modified diene elastomer comprises macromolecules comprising, within their structure, a linear or branched polyether block comprising, at each of the two ends of the block, a branch point to which up to three diene elastomer branches and up to three
- OR groups are bonded, R representing, independently of one another, a C₁-C₈ alkyl substituent or a hydrogen atom,
a- the copolymer exhibiting a Mooney viscosity of at least 30, preferably of at least 40, and of at most 100,
b- the copolymer being composed:
- of at least 20%, preferably at least 30%, of branched macromolecules comprising a polyether block to which at least three diene elastomer blocks are bonded,
- of at most 80%, preferably at most 70%, of linear macromolecules,
c- the polyether block exhibiting a number-average molecular weight varying from 150 to 5000 g/mol, and
d- each of the branch points consisting of a silicon atom;
the branched macromolecules corresponding to the formula I: 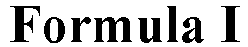 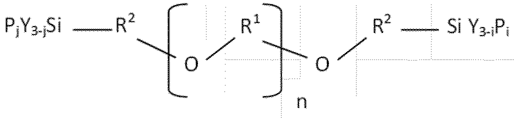 in which:
R¹ represents a linear or branched divalent C₁-C₁₀ hydrocarbon group, in particular a - CH(R') - CH(R") - group, in which R' and R" are, independently of each other, a hydrogen atom or a C₁-C₄ alkyl substituent; preferably, R¹ is a C₁-C₄ alkanediyl group, more preferentially a 1,2- or 1,3-ethanediyl or -propanediyl group,
the R² groups represent, independently of each other, a saturated or unsaturated, linear or branched or cyclic, divalent hydrocarbon group, preferably aliphatic group, having 1 to 50 carbon atoms, preferably a linear aliphatic group, which is preferably saturated, preferentially having 1 to 15 carbon atoms, preferably 2 to 10, preferably 3 to 8,
the Y groups represent, identically or differently, a halogen atom or a group of formula -OR⁴ in which the R⁴ groups represent, independently of one another, a hydrogen atom or a C₁-C₈ alkyl substituent; preferably, the R⁴ groups represent a hydrogen atom or a C₁-C₄ alkyl substituent, preferably methyl or ethyl,
i and j are numbers having, each independently of the other, the value 1, 2 or 3, with the proviso that (i + j) varies from 3 to 6, and
P represents a diene elastomer block;
and the linear block macromolecules corresponding to the formula II: 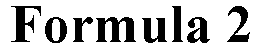 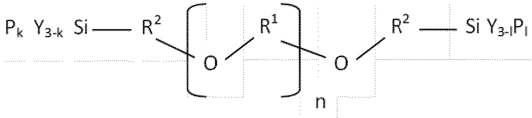 in which:
R¹ represents a linear or branched divalent C₁-C₁₀ hydrocarbon group, in particular a - CH(R') - CH(R") - group, in which R' and R" are, independently of each other, a hydrogen atom or a C₁-C₄ alkyl substituent; preferably, R¹ is a C₁-C₄ alkanediyl group, more preferentially a 1,2- or 1,3-ethanediyl or -propanediyl group,
the R² groups represent, independently of each other, a saturated or unsaturated, linear or branched or cyclic, divalent hydrocarbon group, preferably aliphatic group, having 1 to 50 carbon atoms, preferably a linear aliphatic group, which is preferably saturated, preferentially having 1 to 15 carbon atoms, preferably 2 to 10, preferably 3 to 8,
the Y groups represent, identically or differently, a halogen atom or a group of formula -OR⁴ in which the R⁴ groups represent, independently of one another, a hydrogen atom or a C₁-C₈ alkyl substituent; preferably, the R⁴ groups represent a hydrogen atom or a C₁-C₄ alkyl substituent, preferably methyl or ethyl,
k and l are numbers having, each independently of the other, the value 0 or 1, with the proviso that (k + 1) has the value 1 or 2, and
P represents a diene elastomer block.

2. Composition according to Claim 1, **characterized in that** the modified diene elastomer is a polybutadiene or a butadiene copolymer, preferentially a butadiene/styrene copolymer.

3. Composition according to Claim 1 or 2, **characterized in that** the elastomer branches of the modified diene elastomer have a number-average molar mass (Mn) of at least 40 000 g/mol and of at most 100 000 g/mol.

4. Composition according to any one of Claims 1 to 3, **characterized in that** the end of the elastomer branches not bonded to a silicon atom bears a function comprising a nitrogen atom, preferably a cyclic or acyclic amine function.

5. Composition according to any one of Claims 1 to 4, **characterized in that** the polyether block is a polyoxymethylene, poly(ethylene oxide), poly(propylene oxide) or polytetrahydrofuran block, preferably a poly(ethylene oxide) or poly(propylene oxide) block.

6. Composition according to any one of Claims 1 to 5, **characterized in that** the copolymer comprises at least 50% by weight of branched macromolecules consisting of a polyether block to which at least three diene elastomer blocks are bonded.

7. Composition according to any one of Claims 1 to 6, **characterized in that** the copolymer comprises at least 20% by weight, preferably at least 35%, of branched macromolecules consisting of a polyether block to which three diene elastomer blocks are bonded.

8. Composition according to any one of Claims 1 to 7, **characterized in that** the copolymer comprises at most 25% of branched macromolecules consisting of a polyether block to which four or more diene elastomer blocks are bonded.

9. Composition according to any one of Claims 1 to 8, **characterized in that** at least one, at least two, at least three, at least four, at least five, at least six, at least seven and preferably all of the following characteristics is/are observed:
- the polyether block is linear consisting of -(OR)- units, in which R is a C₁-C₄ alkanediyl group, more preferentially a 1,2- or 1,3-ethanediyl or -propanediyl group;
- the polyether block exhibits a number-average molecular weight substantially of 150 to 5000 g/mol and preferentially of 200 to 3000 g/mol;
- all or a part, preferably at least 50 mol%, of the alkoxy functions substituting one or more silicon atoms are hydrolysed to give hydroxyl groups;
- the diene elastomer is a butadiene/styrene copolymer;
- all or a part, preferably at least 70 mol%, of the ends of elastomer branches not bonded to a silicon atom are functionalized, with respect to the number of moles of chain end, by an amine function;
- the mean Mn of the elastomer branches is less than 150 000 g/mol, preferably from 40 000 to 100 000 g/mol;
- the modified diene elastomer comprises at least 50% by weight of branched macromolecules having at least three branches;
- the modified diene elastomer comprises at least 20% by weight of branched macromolecules having three branches, preferably at least 35%.

10. Composition according to any one of Claims 1 to 9, **characterized in that** the content of silica is greater than or equal to 100 phr.

11. Composition according to any one of Claims 1 to 10, **characterized in that** it comprises 20 phr or more, preferably 50 phr or more, of at least one plasticizer.

12. Composition according to Claim 11, **characterized in that** the plasticizer is chosen from hydrocarbon resins with a high Tg, plasticizing oils and their mixtures.

13. Tyre comprising a semi-finished article constituted, in all or in part, by a composition according to any one of Claims 1 to 12.
